(19) Europäisches Patentamt
European Patent Office
Office européen des brevets

(11) **EP 1 890 024 A1**

(12) **DEMANDE DE BREVET EUROPEEN**

(43) Date de publication:
**20.02.2008 Bulletin 2008/08**

(51) Int Cl.:
*F02D 35/02* *(2006.01)*     *F02D 41/00* *(2006.01)*

(21) Numéro de dépôt: **07301254.4**

(22) Date de dépôt: **20.07.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **01.08.2006 FR 0607041**

(71) Demandeur: **RENAULT S.A.S.**
**92100 Boulogne Billancourt (FR)**

(72) Inventeurs:
• **Talon, Vincent**
**78180 Montigny le Bretonneux (FR)**
• **Emery, Pascal**
**92400 Courbevoie (FR)**

(54) **Determination d'un debut de combustion dans un moteur a combustion interne**

(57)     L'invention concerne un procédé de détermination d'un début de combustion d'un carburant lors de son injection dans un moteur à combustion, comprenant les étapes suivantes :

(a) évaluer une variable « $C_\theta$ » à un angle « $\theta$ » du vilebrequin, « $C_\theta$ » étant fonction d'une évolution angulaire de la quantité d'énergie dans les gaz présents dans la chambre de combustion à un angle « $\theta$ » ;

(b) comparer chaque « $C_\theta$ » à une valeur seuil « S1 » au-delà de laquelle la combustion pourrait avoir commencé ;

(c) comparer « $| C_\theta - C_{\theta-\Delta\theta} |$ » à une valeur « S2 », « S2 » étant une valeur limite au-delà de laquelle « $C_\theta$ » est considérée comme une valeur non suffisamment stable pour identifier une combustion ;

(d) s'il s'avère que le seuil « S1 » a été dépassé et que le seuil « S2 » n'a pas été dépassé, la valeur « $\theta$ » est enregistrée comme étant la valeur angulaire de début de combustion pour le cycle considéré.

L'invention concerne en outre un procédé d'estimation de l'indice de cétane du carburant injecté.

FIG.2

**Description**

L'invention se situe dans le domaine des moteurs à combustion interne (Diesel ou Essence) à injection directe ou indirecte de carburant à N nombre de cylindres.

L'invention concerne plus précisément la détermination d'un début de combustion d'un carburant injecté dans un moteur à combustion interne, sur un nombre *n* de cycles (*n* étant un entier supérieur ou égal à 1) de déplacement d'un piston dans un cylindre.

L'invention concerne tout particulièrement l'estimation de l'indice de cétane du carburant injecté, trouvé à partir de la détermination du début de combustion.

Les normes antipollution devenant de plus en plus sévères, il est important pour les constructeurs automobiles de bien maîtriser le pilotage de l'injection de carburant dans leurs moteurs pour limiter les émissions polluantes.

L'un des paramètres importants sur ces systèmes d'injection est la nature du carburant.

Notamment pour les moteurs Diesel ou Essence, l'indice de cétane du carburant est à prendre en compte.

En effet, le cétane influence notamment le délai d'inflammation du carburant.

Or la maîtrise de ce dernier délai est important car il conditionne le phasage de la combustion dans le cycle thermodynamique par rapport à une consigne d'avance à l'injection donnée, et une combustion mal phasée entraîne une élévation des émissions polluantes.

La connaissance de l'indice de cétane du carburant s'avère donc très utile.

Le document WO 2005/119034 divulgue une estimation de l'indice de cétane du carburant sur la base du délai d'auto-inflammation trouvé entre un temps de référence et le moment d'auto-inflammation.

Le moment d'auto-inflammation est déterminé à partir de l'étude de l'évolution temporelle de la quantité d'énergie existant dans les gaz présents dans la chambre de combustion au cours d'un cycle, la quantité d'énergie étant déduite, à un moment déterminé du fonctionnement du cylindre, du volume de la chambre de combustion et de la pression mesurée dans le cylindre.

S'il est détecté que ladite quantité d'énergie augmente soudainement d'une valeur supérieure à une valeur seuil, la combustion est alors considérée comme détectée, et le moment associé à cette augmentation d'énergie est estimé être ledit moment d'auto-inflammation. L'indice de cétane est alors calculé.

Un objet de l'invention est d'augmenter le rapport signal sur bruit dans le calcul de ladite évolution de quantité d'énergie, et ainsi de fiabiliser encore plus la détection du moment d'inflammation.

Un autre objet de l'invention est de diminuer les risques d'erreurs quant à la valeur du moment d'inflammation.

Pour atteindre ces objets, l'invention propose, selon un premier aspect, un procédé de détermination d'un début de combustion d'un carburant lors de son injection dans un moteur à combustion interne, sur un nombre n de cycles (n étant un entier supérieur ou égal à 1) de déplacement d'un piston dans un cylindre, comprenant les étapes suivantes pour différents angles successifs que prend le vilebrequin du piston dans chaque cycle :

(a) évaluer une variable « $C_\theta$ » à un angle « $\theta$ » du vilebrequin dans la chambre de combustion du cylindre, « $C_\theta$ » étant fonction d'une évolution angulaire de la quantité d'énergie dans les gaz présents dans la chambre de combustion à un angle « $\theta$ » ;

(b) comparer chaque « $C_\theta$ » à une valeur seuil « S1 » au-delà de laquelle la combustion pourrait avoir commencé ;

(c) comparer « $|C_\theta - C_{\theta-\Delta\theta}|$ » à une valeur « S2 », « $C_{\theta-\Delta\theta}$ » étant une variable précédemment évaluée pour l'angle « $\theta-\Delta\theta$ », « S2 » étant une valeur limite au-delà de laquelle « $C_\theta$ » est considérée comme une valeur non suffisamment stable pour identifier une combustion ;

(d) s'il s'avère, à l'issue des deux précédentes étapes de comparaison, que le seuil « S1 » a été dépassé et que le seuil « S2 » n'a pas été dépassé pour un $C_\theta$, la valeur « $\theta$ » est enregistrée comme étant la valeur angulaire de début de combustion pour le cycle considéré.

D'autres caractéristiques optionnelles de ce procédé de détermination d'un début de combustion sont :

- ladite évolution angulaire de la quantité d'énergie à un angle « $\theta$ » correspond à la dérivée angulaire de la quantité d'énergie « Q » à un angle « $\theta$ », qui est calculée à partir de l'expression suivante :

$$\frac{dQ}{d\theta} = \frac{V}{\gamma - 1}\ \frac{p}{T}\frac{dT}{d\theta}\ + p\frac{dV}{d\theta}$$

« p » étant la pression dans le cylindre à l'angle « $\theta$ »,
« V » étant le volume de la chambre de combustion à l'angle « $\theta$ »,

« T » étant la température dans la chambre de combustion à l'angle « θ »,

« γ » étant le rapport de chaleur spécifiques « $C_p/C_v$ ».

- « $C_\theta$ » est calculée à partir de : une mesure de l'angle de vilebrequin « θ », prises dans le cylindre en fonctionnement ; une mesure de la pression à l'angle de vilebrequin « θ », prise dans le cylindre en fonctionnement ; une sélection du volume de la chambre de combustion à l'angle « θ » dans une liste connue de valeurs volumiques classées par angle vilebrequin ou un calcul du volume selon une loi mathématique ; un calcul de la température de la chambre de combustion à l'angle « θ » sur la base desdits volume et pression ;

- « S1 » et/ou « S2 » est une valeur fixe ou une valeur déterminée à partir d'une cartographie fonction de conditions d'injection du moteur ;

- le moteur comprend une deuxième injection, de sorte qu'il y ait ainsi une injection pilote et une injection principale. Le procédé comprend en outre la mise en oeuvre des étapes (a) et (b) pour la deuxième injection, et une étape finale d'enregistrement de la valeur « θ » comme étant la valeur angulaire de début de combustion pour le cycle considéré si le seuil « S1 » a été dépassé ;

- alternativement, le moteur comprend une deuxième injection, de sorte qu'il y ait ainsi une injection pilote et une injection principale, le procédé comprenant alors la mise en oeuvre des étapes (a) à (d) pour la deuxième injection ;

Selon un deuxième aspect, l'invention propose un procédé d'estimation de l'indice de cétane d'un carburant injecté dans un moteur à combustion interne, sur un nombre n de cycles (n étant un entier supérieur ou égal à 1), comprenant les étapes suivantes :

- déterminer un début de combustion d'un carburant injecté pour chacun des cycles, conformément audit procédé de détermination d'un début de combustion;

- calculer l'angle moyen de début de combustion « $\theta_{moy}$ » à partir des « θ » de début de combustion relevés pour l'ensemble des *n* cycles ;

- calculer le délai de combustion entre un temps de référence déterminé et le temps début de combustion trouvé à partir de « $\theta_{moy}$ » ;

- déduire l'indice de cétane à partir du délai de combustion, sur la base d'un modèle déterminé ou d'une liste de correspondance entre des délais de combustion et des indices de cétane.

D'autres caractéristiques optionnelles de ce procédé d'estimation d'indice de cétane sont:

- l'indice de cétane est déduit à partir d'un ajustement de sa valeur afin de minimiser un écart entre ledit délai de combustion calculé et un délai de combustion estimé, le délai de combustion estimé étant calculé à partir de la loi d'Arrhenius prenant comme variables des pression, température, volume et masse de gaz mesurés dans le cylindre à chaque angle vilebrequin ;

- alternativement, l'indice de cétane est déduit en faisant correspondre ledit délai de combustion calculé avec une expression empirique du délai de combustion, basée sur la loi d'Arrhenius, conduisant à l'expression suivante :

$$CN = \frac{B.\left(\frac{C}{P_{pmh}}\right)^{D}}{T_{pmh}.\ln\left(\frac{\delta}{A}\right)}$$

où CN, $T_{pmh}$ et $P_{pmh}$ sont respectivement l'indice de cétane, la température et la pression au point mort haut sans combustion, les coefficients A, B, C et D sont des constantes prédéterminées, et δ est ledit délai de combustion, avec :

$$T_{pmh} = T_{adm}.rv^{\gamma-1}$$

$$P_{pmh} = P_{adm}.rv^{\gamma}$$

où $rv=V_{adm}/V_{pmh}$, où $T_{adm}$ et $P_{adm}$ sont la température et la pression dans la chambre de combustion à la fermeture de la soupape d'admission, et la valeur de (γ) est identifiée à chaque cycle pendant la phase de compression, c'est-à-dire entre la fermeture de la soupape d'admission et l'injection, de la manière suivante :

$$\gamma = -\frac{\ln\left(P_{fin}\right) - \ln\left(P_{deb}\right)}{\ln\left(V_{fin}\right) - \ln\left(V_{deb}\right)}$$

où les angles de fin (« fin ») et de début (« deb ») sont pris assez éloignés, soit respectivement juste avant l'injection et juste après la fermeture de la soupape d'admission.

D'autres caractéristiques, buts et avantages de l'invention apparaîtront mieux à la lecture de la description détaillée qui suit, qui est non limitative, illustrée par les figures suivantes :

La figure 1 représente schématiquement une vue en coupe d'un cylindre d'un moteur à combustion en fonctionnement.

La figure 2 est un organigramme représentant différentes étapes d'un procédé de détermination d'un moment d'inflammation selon l'invention.

La figure 3A représente une fonction triangle.

La figure 3B représente un graphe comparatif entre une dérivée angulaire d'une quantité d'énergie dans le cylindre pour différents angles vilebrequin et la même dérivée multipliée par la fonction triangle de la figure 3A.

Les figures 4A et 4B sont deux graphes représentant chacun une dérivée angulaire d'une quantité d'énergie dans le cylindre pour différents angles vilebrequin, prise seule (figure 4A) ou multipliée par l'inverse du volume de la chambre de combustion (figure 4B).

La figure 5A est un graphe représentant l'évolution du volume de la chambre de combustion au cours d'un cycle, en comparaison avec un modèle parabolique.

Les figures 5B et 5C sont deux graphes représentant chacun une dérivée angulaire d'une quantité d'énergie dans le cylindre pour différents angles vilebrequin, multipliée par l'inverse du volume réel de la chambre de combustion (figure 5A) ou multipliée par l'inverse du volume selon un modèle parabolique de la chambre de combustion (figure 5B).

La figure 6 représente différentes étapes menant au calcul de $C_\theta$.

La figure 7 est un schéma fonctionnel d'un détecteur de début de combustion selon l'invention.

La figure 8 est un schéma représentant deux détecteurs de début de combustion selon l'invention, mis en oeuvre respectivement dans un moteur à double injection.

La figure 9A est un graphe donnant des résultats d'estimation de moments de début de combustion en fonction du nombre de cycles piston.

La figure 9B est un graphe donnant des résultats d'estimation délais d'auto-inflammataion en fonction de différentes avances à l'injection.

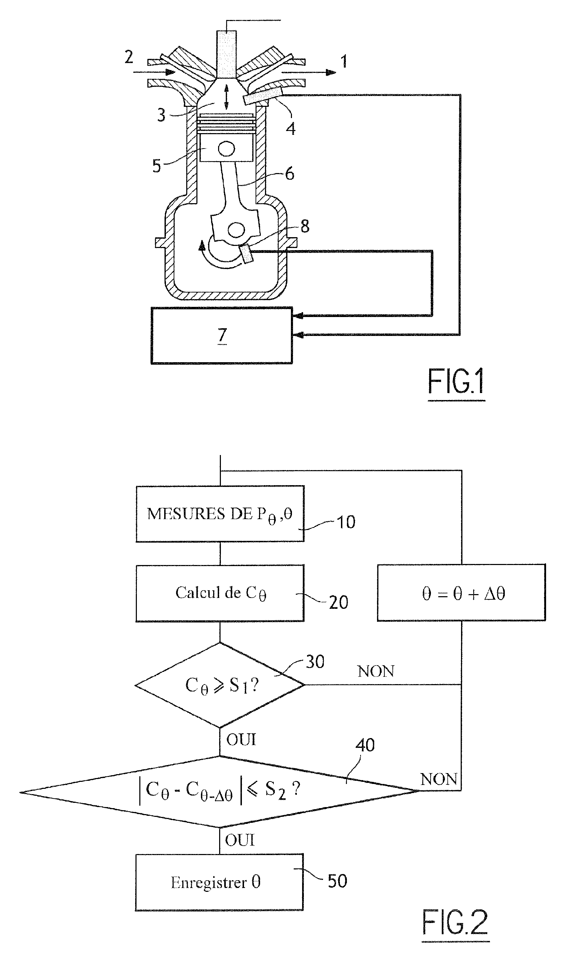

En référence à la figure 1, un dispositif selon l'invention y est illustré. Il s'applique à un moteur à combustion interne Diesel ou Essence comportant un piston mobile 5, une bielle 6, une chambre de combustion 3, un dispositif d'admission de gaz 2, un dispositif d'échappement de gaz 1, un moyen de mesure apte à mesurer différents angles « θ » de rotation du vilebrequin 8, un capteur de pression 4 placé dans la chambre de combustion 3, et des moyens de traitement 7 aptes à recevoir les signaux provenant dudit capteur de pression 4 et du moyen de mesure 8, à synchroniser ces signaux pour pouvoir les corréler, et à traiter ces signaux pour mettre en oeuvre un procédé selon l'invention.

Lors du fonctionnement du moteur, une estimation de l'indice de cétane selon l'invention est faite. Elle s'effectue avantageusement dans des conditions de fonctionnement fixées à l'avance lors de la mise au point du moteur.

L'indice de cétane du carburant est estimé, comme on le verra plus loin, grâce à l'estimation du délai d'inflammation ou d'auto-inflammation du carburant.

Le délai d'inflammation ou d'auto inflammation est le temps qui s'écoule entre un temps de référence, e.g. le moment où l'on injecte le carburant, et l'instant où la combustion démarre.

Il est donc avant tout essentiel de déterminer le moment du début de la combustion (encore noté « SOC »).

En référence à la figure 2, sont représentées différentes étapes permettant de réaliser cette détermination du SOC, basée sur le calcul et l'analyse d'une variable C, image de la combustion.

A partir de la valeur de pression $p_\theta$ régnant dans la chambre de combustion, et de la valeur de la position angulaire θ du vilebrequin, qui ont été mesurées lors de l'étape 10, une variable $C_\theta$ est en permanence calculée lors de l'étape 20.

$C_\theta$ est fonction d'une évolution angulaire de la quantité d'énergie « Q » dans les gaz présents dans la chambre de combustion 3 à un angle θ.

Cette évolution angulaire de la quantité d'énergie est avantageusement la dérivée

$$\frac{dQ}{d\theta}.$$

Cette valeur $C_\theta$ est calculée en permanence sur la base du dégagement d'énergie dans le cylindre, pour un angle θ évoluant entre -180° et +180° (i.e. dans un cycle), ou dans un intervalle plus réduit.

Le principe est d'identifier un changement significatif dans la valeur de $C_\theta$ pour diagnostiquer le début de la combustion. La valeur de l'angle vilebrequin est alors enregistrée, et l'instant de début de combustion est ainsi déduit. Tant que ce changement significatif dans la valeur de $C_\theta$ n'a pas eu lieu, la combustion est estimée comme n'ayant pas commencé.

Selon un premier mode de réalisation, $C_\theta$ se calcule à partir de :

$$C = \frac{1}{F}\frac{dQ}{d\theta} \quad (1)$$

où « Q » est l'énergie dans le cylindre,
« θ » est l'angle vilebrequin, et
« F » est une fonction de « θ » telle que « F » est maximale au point mort bas (encore noté PMB), minimale au point mort haut (encore noté PMH), monotone entre les deux, et toujours strictement positive.

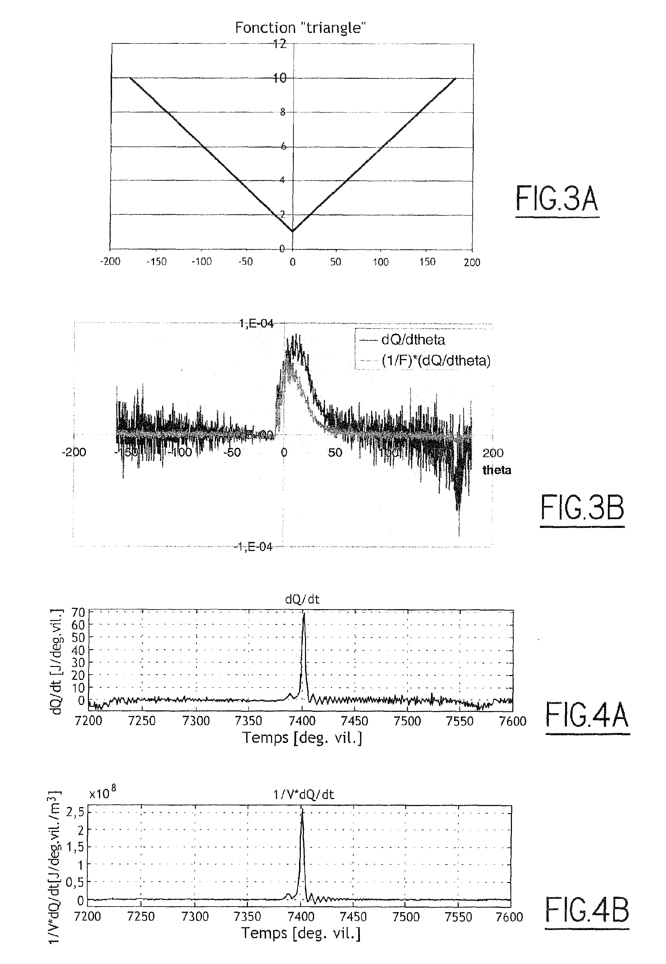

En référence à la figure 3A, une fonction "triangle" possède de telles propriétés, et peut être définie de la façon suivante :

$$F = F_0 + K.|\theta| \quad (2)$$

où « K » et « $F_0$ » sont des constantes.

En pratique, le calcul du dégagement d'énergie

$$\frac{dQ}{d\theta}$$

donne une information bruitée.

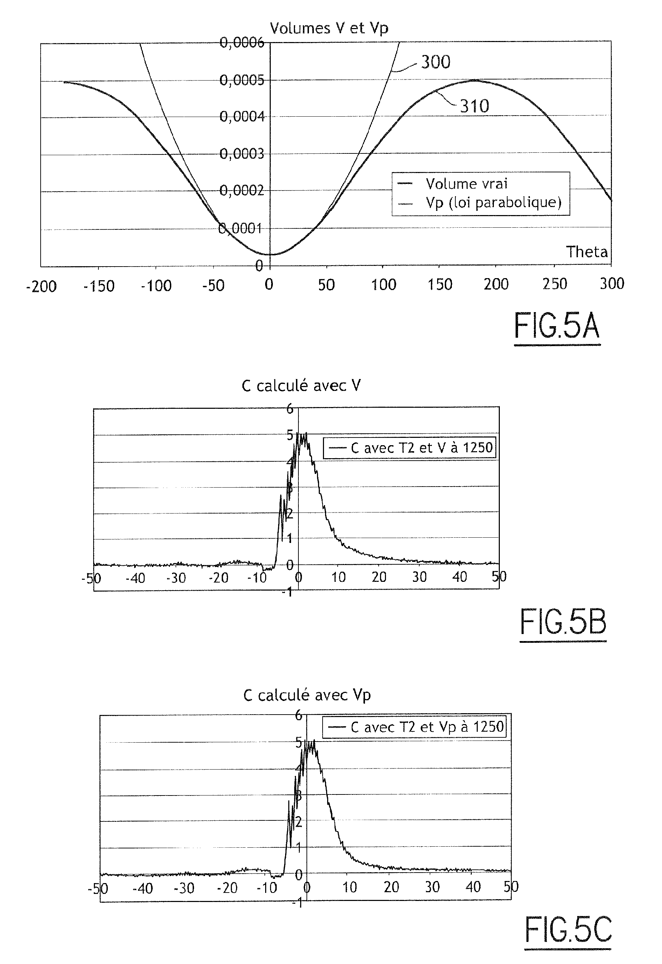

L'effet d'une telle fonction « F » est d'atténuer le signal de dégagement d'énergie dans les zones où il est le plus bruité (du coté du PMB), par rapport aux zones où il est susceptible de contenir l'information qui intéresse (du coté du PMH), comme on le voit sur la figure 4B.

Cette opération augmente donc le rapport signal sur bruit et diminue les contraintes sur le filtrage de la pression à mettre en place.

Selon un deuxième mode de réalisation, $C_\theta$ se calcule à partir de l'expression simplifiée du dégagement d'énergie volumique dans le cylindre suivante :

$$C = \frac{1}{V}\frac{dQ}{d\theta} \quad (3)$$

où V représente le volume de la chambre de combustion 3 pour un angle θ.

Comme le volume varie cycliquement avec θ, la multiplication par $\frac{1}{V}$ a pour avantage de diminuer l'amplitude du bruit sur le dégagement d'énergie là où il est typiquement le plus fort (vers les PMB). Ce calcul amplifie aussi le signal là ou il est utile pour la détection de SOC (typiquement rencontré au voisinage du PMH).

Cette opération augmente donc le rapport signal sur bruit et diminue les contraintes sur le filtrage de la pression à mettre en place (voir figure 2).

En pratique, le calcul de

$$\frac{dQ}{d\theta}$$

peut s'avérer complexe et peut donc nécessiter de la puissance de calcul pour être réalisé tel quel dans un système électronique embarqué de contrôle moteur. Mais la division par le volume est intéressante car elle permet de réaliser les simplifications exposées ci-après.

On part de l'expression, bien connue de l'homme du métier, du dégagement d'énergie apparent

$$\frac{dQ}{d\theta}$$

du gaz présent dans la chambre :

$$\frac{dQ}{d\theta} = \frac{1}{\gamma - 1} V \left( \frac{p}{m} \frac{dm}{d\theta} + \frac{p}{T} \frac{dT}{d\theta} - \frac{p}{V} \frac{dV}{d\theta} \right) + \frac{\gamma}{\gamma - 1} p \frac{dV}{d\theta} \quad (4)$$

avec :

- Q : quantité d'énergie présente dans les gaz de la chambre de combustion 3 ;
- θ : angle vilebrequin ;
- γ : rapport des chaleurs spécifiques ($C_p$ et $C_v$) à θ ;
- V : volume de la chambre de combustion à θ ;
- p : pression dans la chambre de combustion à θ ;
- m : masse de gaz enfermés dans le cylindre à θ ;
- T : température dans la chambre de combustion à θ.

Il est à noter que l'expression (4) pourrait être écrite en remplaçant θ par le temps *t*.

Dans le cadre de l'invention, il sera toutefois préféré l'utilisation de l'angle θ, car le système devient alors indépendant de la vitesse de rotation du moteur.

Il est à noter par ailleurs que l'expression (4) prise comme point de départ contient la dérivée angulaire de la température et non pas la dérivée de la pression.

Ceci va permettre de minimiser le bruit, car la dérivée de la pression p mesurée introduit un bruit important dans le résultat.

Avantageusement selon l'invention, seules la pression p et l'angle θ sont des valeurs mesurées par le dispositif selon la figure 1.

Les autres variables de l'expression (4) sont négligées ou estimées, comme nous allons le voir.

Concernant la masse m, l'hypothèse est prise de la considérer comme constante (la masse injectée est donc négligée). L'expression de C devient alors :

$$C = \frac{1}{V}\frac{dQ}{d\theta} = \frac{1}{\gamma - 1}\left(\frac{p}{T}\frac{dT}{d\theta}\right) + \frac{p}{V}\frac{dV}{d\theta} \quad (5)$$

Le rapport des chaleurs spécifiques γ est considéré constant avant la combustion ainsi que dans les premiers instants de la combustion. On pourra par exemple l'estimer égal à 1,4.

Pour une géométrie donnée d'un moteur, il y a une relation immuable entre le volume V et l'angle θ. Pour estimer le volume V et sa dérivée

$$\frac{dV}{d\theta},$$

une table de valeurs donnant le volume V pour différentes valeurs de θ est utilisée.

La température T et sa dérivée

$$\frac{dT}{d\theta}$$

sont calculées sur la base desdits volume V et pression p.

Selon un premier mode de calcul de T, on suppose que le gaz est parfait. On peut alors écrire à tout moment :

$$\frac{pV}{T} = mr = constante \quad (6)$$

Donc à deux instants ou à deux angles différents :

$$\frac{p_\theta V_\theta}{T_\theta} = \frac{p_0 V_0}{T_0} \quad (7)$$

On en déduit :

$$T_\theta = T_0 \frac{p_\theta V_\theta}{p_0 V_0} \quad (8)$$

avec :

To, $p_0$, $V_0$ : température, pression et volume initiaux (i.e. à l'injection)

$T_\theta$, $p_\theta$, $V_\theta$ : température, pression et volume à l'angle θ

La température est donc estimée pour chaque valeur de l'angle θ, à partir de conditions initiales de pression, température et volume en début de cycle, de préférence juste après la fermeture de la soupape d'admission.

On pourra prendre la température initiale constante et égale à 300K, ou bien la faire dépendre de la température d'air admis, si on la mesure.

Cette méthode peut être préférée car elle nécessite peu de calculs, étant donné que

$$\frac{T_0}{p_0 V_0}$$

n'est calculé qu'une seule fois par cycle et qu'il suffit de multiplier ce résultat par $p_\theta V_\theta$ à chaque nouvelle valeur de l'angle $\theta$.

Selon un deuxième mode de calcul de T, on suppose aussi que le gaz est parfait ($pV = mrT$, où mr est constant), mais on en déduit cette fois:

$$\frac{1}{T}\frac{dT}{d\theta} = \frac{1}{p}\frac{dp}{d\theta} + \frac{1}{V}\frac{dV}{d\theta} \quad (9)$$

Cette expression pourrait être réintroduite dans l'expression de C, mais cela ferait réapparaître la dérivée de la pression

$$\frac{dp}{d\theta},$$

qui est une source de bruit pour le calcul.

Un autre moyen pour exprimer

$$\frac{1}{T}\frac{dT}{d\theta}$$

sera donc préféré.

Pour cela, l'expression (9) est discrétisée, et les valeurs prises par V, p, T sont considérées aux angles $\theta$ et $\theta$-$\Delta\theta$, où $\Delta\theta$ est constant et représente le pas du calcul. L'expression (9) devient alors :

$$\frac{1}{T_\theta}\frac{T_\theta - T_{\theta-\Delta\theta}}{\Delta\theta} = \frac{1}{p_\theta}\frac{p_\theta - p_{\theta-\Delta\theta}}{\Delta\theta} + \frac{1}{V_\theta}\frac{V_\theta - V_{\theta-\Delta\theta}}{\Delta\theta} \quad (10)$$

L'expression suivante de la température T à l'angle $\theta$ est alors déduite, en fonction de la température à l'angle $\theta$-$\Delta\theta$ :

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right) \quad (11)$$

La température est donc estimée de manière récursive pour chaque valeur de l'angle $\theta$, à partir d'une température initiale correspondant à la température dans le cylindre à l'instant de la fermeture de la soupape d'admission. Elle peut être prise constante et égale à 300K, ou bien dépendante d'une température d'air admis mesurée par des moyens appropriés.

Pour terminer, l'expression de C est également discrétisée, et la valeur de C pour chaque valeur de $\theta$ est donnée par la formule :

$$C_\theta = \frac{1}{\gamma - 1}\left(\frac{p_\theta}{T_\theta}\frac{T_\theta - T_{\theta-\Delta\theta}}{\Delta\theta}\right) + \frac{p_\theta}{V_\theta}\frac{V_{\theta-\Delta\theta}}{\Delta\theta} \quad (12)$$

En outre, l'expression (9), (11) ou (12) peut être encore plus simplifiée, en termes de calcul, en simplifiant l'expression de V (ou $V_\theta$).

En effet, comme il est dit plus haut, la loi de volume V, qui est immuable pour une géométrie de moteur donnée, peut être déterminée par une table de valeurs, associant à chaque valeur de θ une valeur de volume.

Dans un système embarqué il est cependant intéressant de diminuer la taille des tables de valeurs car elles consomment des ressources de mémoire. La simplification exposée ci-après va permettre pour le moins de diminuer la taille de tables de valeurs en mémoire, et pour le plus de s'en affranchir.

Plutôt que d'utiliser le volume vrai dans les calculs exposés précédemment, on lui substituera une loi parabolique Vp donnée par l'expression :

$$V_p = V_0 + K_p \theta^2 \, ,$$

où $V_0$ est constant et est le volume au PMH (volume mort),
$K_p$ un coefficient à ajuster de telle façon que la courbe de Vp soit très proche à la courbe de V au voisinage du PMH (voir figure 5A pour illustration).

L'influence de cette simplification sur C est illustrée en comparant les figures 5B et 5C, dans lesquelles on voit l'effet négligeable visible de l'approximation parabolique.

$V_p$ peut ainsi être partout substitué à V dans les calculs exposés précédemment : pour le calcul des températures $T_\theta$ et $T_{\theta-\Delta\theta}$, et dans le terme

$$\frac{p_\theta}{V_\theta} \frac{V_\theta - V_{\theta-\Delta\theta}}{\Delta\theta}$$

Du temps de calcul est ainsi gagné et des ressources sont économisées.

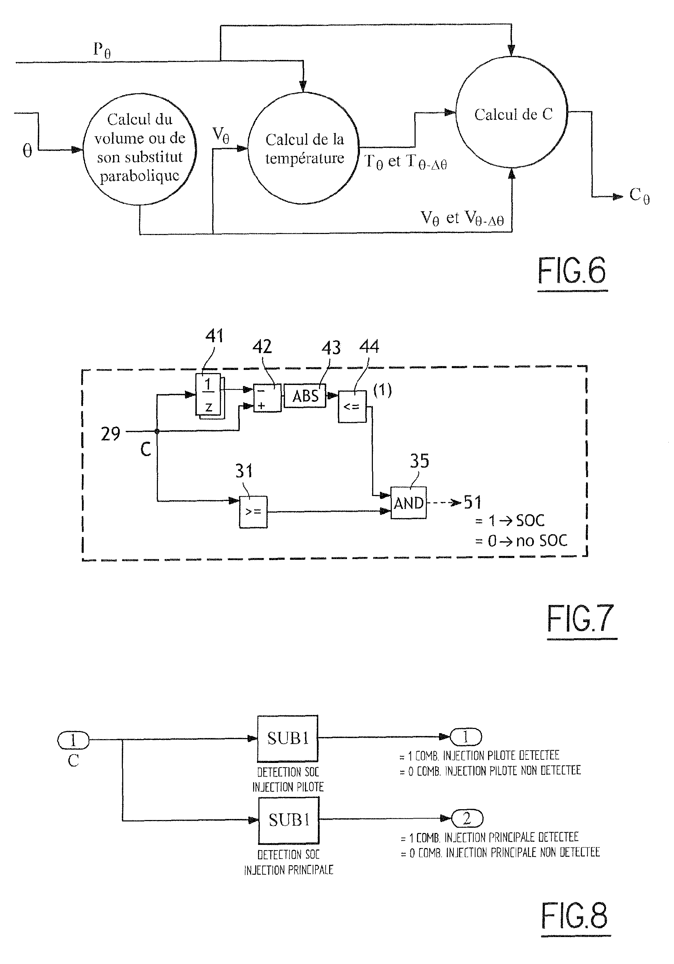

En synthèse, compte tenu des simplifications énoncées précédemment, la chaîne de calcul menant à la variable $C_\theta$ peut se schématiser par la figure 6.

En référence à la figure 2, une fois que l'étape de calcul 20 de $C_\theta$ a été réalisée, une détection du SOC est mise en oeuvre, au moyen de deux étapes 30 et 40 de comparaison de $C_\theta$ avec des valeurs seuil respectives « S1 » et « S2 ».

Deux tests 30-40 sont ainsi successivement effectués.

Le premier test 30 observe si la variable $C_\theta$ dépasse une valeur S1 au-delà de laquelle la combustion pourrait avoir commencé. En effet, la pente prise par Q en θ est alors suffisamment grande pour estimer que, a priori, la combustion est détectée.

Le deuxième test 40 compare $C_\theta$ et $C_{\theta-\Delta\theta}$ en observant si la valeur absolue de la différence entre $C_\theta$ et $C_{\theta-\Delta\theta}$ est inférieure à une valeur seuil S2, S2 étant une valeur limite au-delà de laquelle on considère que la combustion ne peut démarrer.

Si ces deux conditions sont vérifiées, le SOC est détecté.

Le deuxième test a notamment pour objet d'éviter les fausses détections dues au bruit de mesure, ce bruit ayant pour caractéristique une forte variation en amplitude d'une valeur de $C_\theta$ à sa suivante. Le deuxième test permet donc d'éviter les dépassements « accidentels » de S1. En outre, étant donné que ce deuxième test offre une garantie supplémentaire contre des erreurs de détection du SOC, il est permis d'ajuster plus finement le premier seuil « S1 » pour améliorer la détection.

Les seuils S1 et S2 peuvent être fixes ou issus d'une cartographie en fonction par exemple de paramètres d'injection du moteur, tels que la charge moteur (ou la quantité de carburant injectée). Ces valeurs seuil peuvent être basées par exemple sur des expérimentations préalables. Ainsi, sachant que, lors de fortes injections, l'amplitude de C est importante, il est judicieux d'augmenter S1 pour diminuer le risque de fausses détections dues au bruit de mesure. Dans ce cas là, il est aussi utile d'augmenter S2 car l'amplitude de variation sur un Δθ est plus importante.

Le dispositif logique de détection du SOC est illustré sur la figure 7, recevant en entrée 29 la variable $C_\theta$, et comprenant un comparateur 31 permettant la comparaison de $C_\theta$ avec S1, un moyen 41 agencés pour lire la variable $C_{\theta-\Delta\theta}$ préalablement calculée, des éléments de calculs 42-43 aptes à réaliser l'opération de soustraction en valeur absolue entre $C_\theta$ et $C_{\theta-\Delta\theta}$, un comparateur 44 réalisant la comparaison de $|C_\theta - C_{\theta-\Delta\theta}|$ avec S2, et l'élément logique « AND » 35 fournissant « 1 » en sortie 51 si les deux conditions sont remplies (i.e. SOC détecté) et « 0 » en sortie 51 si zéro ou une des deux conditions ne sont pas remplies (i.e. SOC non détecté).

Selon une configuration particulière de l'invention, le moteur est à double injection (une injection pilote et une injection principale), dont la première (la pilote) est différente en quantité injectée de la seconde (principale). Il est à remarquer qu'on peut appliquer le principe précédemment expliqué au cas multi-injection avec plus de deux injections, en appliquant à chaque injection (ex. : pilote, principale et post) ledit algorithme. Pour une double injection, on peut vouloir détecter séparément le SOC de chacune des deux injections. Pour cela il suffit de dupliquer ladite détection (selon la figure 7), et appliquer des seuils différents aux deux détections (voir figure 8 pour illustration).

Optionnellement, on peut modifier le comparateur 31 pour l'injection principale en lui faisant appliquer un <= au lieu d'un >=. Ceci a pour avantage d'éviter que l'algorithme de détection de la combustion principale puisse détecter la combustion de l'injection pilote. Dans ce cas, le seuil S2 de l'injection principale peut alors être fixé égal au seuil S2 de la pilote.

En variante, on peut aussi appliquer deux seuils à l'injection pilote et un seuil à l'injection principale (le SOC de cette dernière étant plus simple à détecter car plus facile à discriminer du bruit de par son amplitude plus élevée).

En référence à la figure 2, une fois la détection (40) du SOC effectuée, l'angle vilebrequin θ correspondant est enregistré en (50).

Pour un nombre $n$ de cycles de vilebrequin ($n$ étant un entier supérieur ou égal à 1), $n$ angles de SOC peuvent ainsi être mémorisés.

En référence à la figure 10, l'indice de cétane est alors estimé.

En premier lieu, une étape de moyennage (60) des valeurs de ces $n$ angles mémorisées est mise ne oeuvre, donnant une valeur $\theta_{moy}$.

En second lieu, le délai δ d'inflammation ou d'auto-inflammation est ensuite calculé (70). Ce délai δ est pris égal à la différence dudit angle moyen de SOC avec une valeur de référence, qui peut être la valeur de l'avance à l'injection (encore notée SOI), « l'avance à l'injection » étant la durée en angle (ou en temps) entre le point mort haut (PMH) et l'angle du début de l'injection.

Grâce à la connaissance du début de combustion (SOC) et du phasage de l'injection (SOI) on est alors capable de reconstruire le délai d'auto inflammation δ.

$$\delta = SOC - SOI \quad (13)$$

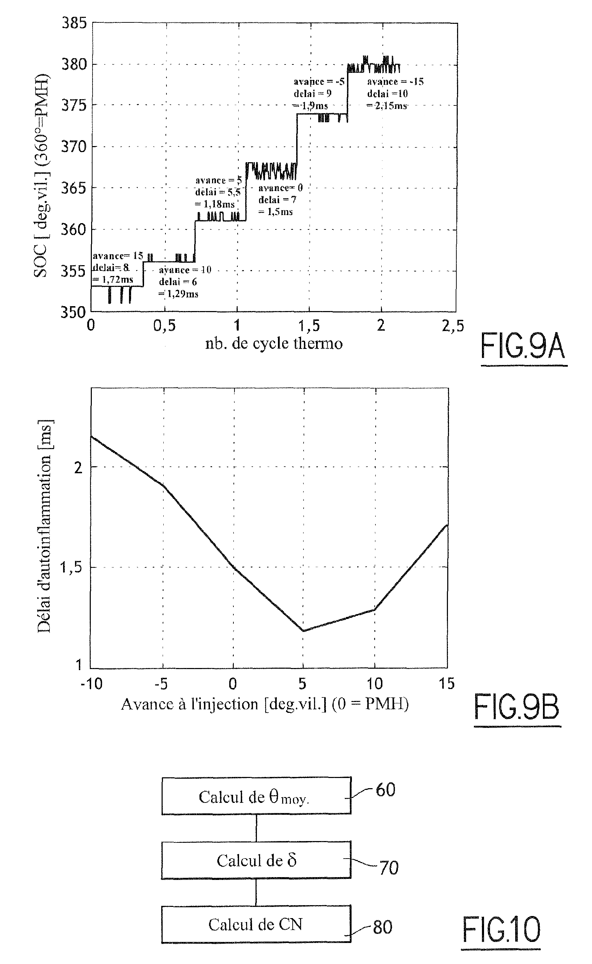

Les figures 9A et 9B montrent les résultats d'estimation de SOC et de durées d'auto-inflammation δ pour un moteur Diesel déterminé. Le SOC est donné en fonction du nombre de cycles (figure 9A), et le délai d'auto-inflammation δ en fonction du de l'avance à l'injection (figure 9B). Le SOC et le délai δ ont été estimés pour différentes valeurs d'avances à l'injection (SOI), exprimées en degré vilebrequin, et variant entre -15 et +15, avec un pas de 5. La durée d'auto-inflammation est quant à elle exprimée à la fois en degré vilebrequin et en millisecondes.

Le PMH correspondant à 360°, on peut constater en premier lieu que, comme dit précédemment, l'auto-inflammation est déclenchée à proximité du PMH.

On peut aussi constater que le délai d'injection évolue entre 1,18 ms et 2,15 ms selon la valeur de l'avance à l'injection, les valeurs les plus faibles étant ici trouvées pour les faibles valeurs de l'avance à l'injection.

En référence à la figure 10, l'indice de cétane est alors estimé (80), en incluant la valeur du délai d'auto-inflammation δ dans un modèle donnant une estimation de l'indice de cétane en fonction du délai d'auto-inflammation.

Selon un premier mode de calcul de l'indice de cétane, celui-ci est estimé sur plusieurs cycles $n$ en régime stabilisé, en ajustant sa valeur afin de minimiser l'écart entre ledit délai de combustion calculé δ et un délai de combustion estimé δe.

Le délai de combustion estimé δe est calculé à partir de la loi d'Arrhenius suivante (comme on le verra plus loin) :

$$\tau = P^{-n}.A.exp\frac{Ea}{r.T} \quad (14)$$

où τ représente un temps caractéristique qui sera intégré au cours du cycle moteur afin de vérifier qu'il atteint un critère et donc que la combustion est déclenchée ;
P et T sont respectivement la pression et la température des gaz dans la chambre de combustion à un angle θ ;
les coefficients n et A sont des coefficients à calibrer ;
les termes Ea et r représentent l'énergie d'activation du carburant et la constante des gaz parfaits.

Il existe, dans la littérature une multitude de valeurs données aux paramètres $n$, A, *Ea et r* de la loi d'Arrhenius. Ces paramètres ont été typiquement déterminés à partir d'expériences de type tube à choc. Nous donnons ci-dessous des valeurs assez classiques utilisées pour du gazole conventionnel (Stringer, Clark et Clark - The spontaneous ignition of hydrocarbon fuels in a following system, Proc. Instn. Mech. Engrs vol 184 pt 3J, 1969) :

| n | A | Ea/r |
|-------|--------|------|
| 0.757 | 0.0405 | 5473 |

Pour calculer $\tau$, les variables sont donc la pression, la température, le volume et la masse de gaz qui peuvent tous être mesurés dans le cylindre à chaque angle vilebrequin.

Cependant, on peut faire l'économie des moyens de détection de la température (T), en retrouvant la valeur de cette dernière à partir de l'acquisition de la pression dans le cylindre (P) et de la connaissance du volume (V), grâce à la loi des gaz parfaits suivante.

$$T = \frac{P.V}{m.r} \quad (15)$$

où V, m et r sont respectivement le volume de la chambre de combustion 3, la masse de gaz enfermée dans la chambre 3 et la constante des gaz parfaits.

Le volume (V) est par exemple déterminé à partir d'une cartographie ou calculé avec une loi classique de type : $V_{cyl} = f(\theta)$, comme vu précédemment.

La masse (m) enfermée dans le cylindre est déterminée par exemple à partir d'une cartographie de remplissage (fonction du régime et de la pression collecteur) ou du débit mesuré par le débitmètre auquel on ajoute l'EGR (acronyme anglo-saxon de « Exhaust Gas Recirculation », pour gaz d'échappement recirculé à l'admission, afin de favoriser la diminution des polluants comme les NOx) présent dans le collecteur d'admission.

Les valeurs de pression, température et volume sont enregistrés à chaque degré vilebrequin (ou sur un pas d'échantillonnage différent).

Le délai d'auto-infammation $\tau$ est donc déterminé à chaque instant (i.e. à chaque angle vilebrequin $\theta$), au pas d'échantillonnage $\Delta\theta$ près.

La combustion est estimée être déclenchée lorsque l'intégrale de l'inverse de $\tau$ atteint un critère (ici 1).

$$\int_{t_{ini}}^{t_{soc}} \frac{1}{\tau}.dt = 1 \quad (16)$$

où $t_{ini}$ et $t_{soc}$, sont respectivement l'instant de début d'injection et de début de combustion. Cette équation peut alors être transcrit en variable angulaire :

$$\int_{\theta_{ini}}^{\theta_{soc}} \frac{1}{\tau}.\frac{1}{\omega}.d\theta \quad (17)$$

où $\omega$ est la vitesse angulaire du vilebrequin, et

$\theta_{ini}$ et $\theta_{soc}$ sont respectivement l'angle de phasage de l'injection et l'angle de début de combustion.

Connaissant $\theta_{ini}$, l'angle $\theta_{soc}$ est ainsi obtenu à partir de T.

Le délai d'auto inflammation estimé $\delta_e$ est alors calculé:

$$\delta_e = SOC_e\text{-}SOI \quad (18)$$

où $SOC_e$ représente $\theta_{soc}$ ou sa correspondance temporelle

SOI est le temps de début d'injection, exprimée en angle vilebrequin ou en temps (ms).

Une étape de comparaison entre le délai d'auto inflammation calculé $\delta$ et le délai d'auto inflammation estimé $\delta_e$ est alors mise en oeuvre.

S'il existe une différence significative entre les deux délais, ledit paramètre d'énergie d'activation (Ea) de la loi d'Arrhenius est alors estimé erroné. Or le paramètre (Ea) est directement fonction du taux de cétane du carburant (CN) :

$$Ea = \frac{Eb}{CN} \quad (19)$$

Sur les cycles suivants la valeur du taux de cétane (CN) est alors ajustée et l'opération du calcul de l'estimation du délai ($\delta_e$) est à nouveau mise en oeuvre afin de minimiser l'écart avec le délai d'auto inflammation calculé ($\delta$).

$$\varepsilon = \delta - \delta_e \quad (20)$$

Si l'écart ($\varepsilon$) est positif le coefficient (CN) doit être augmenté, sinon diminué. Afin de déterminer l'évolution du (CN), une méthode de dichotomie ou autre de type gradient peut être utilisée. L'ajustement des paramètres des algorithmes est fait en fonction du degré de précision et de vitesse de convergence souhaité.

Selon un deuxième mode de calcul de l'indice de cétane, celui-ci est estimé à partir de la formule empirique du délai d'auto-inflammation suivante, déduite à partir de la littérature de Hardenberg and Hase (SAE 790493) :

$$\delta = A.\exp\left( \frac{B}{CN.T_{pmh}} \cdot \left( \frac{C}{P_{pmh}} \right)^D \right) \quad (21)$$

où CN, T et P sont respectivement l'indice de cétane, la température et la pression au PMH sans combustion.
Les coefficients A, B, C et D doivent être identifiés. Ils sont typiquement identifiés sur des essais au banc moteur avec des carburants dont l'indice de cétane est connu.

De la dernière formule, une loi inverse permet d'obtenir l'indice de cétane pour un délai donné :

$$CN = \frac{B.\left( \dfrac{C}{P_{pmh}} \right)^D}{T_{pmh}.\ln\left( \dfrac{\delta}{A} \right)} \quad (22)$$

La pression et la température sont calculées à partir des lois de compression adiabatique suivantes :

$$T_{pmh} = T_{adm}.rv^{\gamma-1} \quad (23)$$

$$P_{pmh} = P_{adm}.rv^{\gamma} \quad (24)$$

où $rv = (V_{adm}/V_{pmh})$, où $T_{adm}$ et $P_{adm}$ sont la température et la pression dans la chambre de combustion à la fermeture de la soupape d'admission 2.

La valeur de ($\gamma$) est identifiée à chaque cycle pendant la phase de compression, c'est-à-dire entre la fermeture de la soupape d'admission 2 et la première injection.

$$\gamma = -\frac{\ln\left(P_{fin}\right) - \ln\left(P_{d\acute{e}b}\right)}{\ln\left(V_{fin}\right) - \ln\left(V_{d\acute{e}b}\right)} \;(25)$$

où les angles (fin) et (deb) sont pris assez éloignés, soit respectivement juste avant la première injection (ou avant le PMH) et juste après la fermeture de la soupape d'admission 2.

L'identification du γ permet de prendre en compte de meilleur façon les pertes aux parois.

Le calcul de l'indice de cétane (CN) n'intervient qu'une fois par cycle après avoir identifié le coefficient (γ) et que le délai de combustion δ a été calculé comme précédemment décrit.

Cette approche est peu coûteuse en terme de calcul.

Selon un troisième mode d'estimation de l'indice de cétane, une liste de correspondance entre des délais de combustion et des indices de cétane est établis à l'avance, sur la base par exemple d'expérimentations. Ainsi, connaissant la valeur du délai d'auto-inflammation δ, on peut lui faire correspondre un indice de cétane.

Cet indice de cétane peut alors être pris en compte lors de la mise au point du moteur. Ceci est effectué pour un carburant de référence.

L'invention permet en outre d'adapter l'injection selon des modifications trouvées dans les propriétés d'injection, telles que par exemple la nature du carburant (qui a nécessairement un indice de cétane différent), pour que le moteur fonctionne avec des réglages optimums.

Les délais d'auto-inflammation qui dérivent de cet indice de cétane peuvent également être pris en compte (au même titre que les caractéristiques des injecteurs) dans la calibration de l'avance à l'injection. Un phasage de l'injection peut ainsi être calibré de sorte à assurer un bon phasage de la combustion par rapport au carburant de référence utilisé.

**Revendications**

1. Procédé de détermination d'un début de combustion d'un carburant lors de son injection dans un moteur à combustion interne, sur un nombre n de cycles (n étant un entier supérieur ou égal à 1) de déplacement d'un piston dans un cylindre, comprenant les étapes suivantes pour différents angles successifs que prend le vilebrequin du piston dans chaque cycle :

   (a) évaluer une variable « $C_\theta$ » à un angle « θ » du vilebrequin dans la chambre de combustion du cylindre, « $C_\theta$ » étant fonction d'une évolution angulaire de la quantité d'énergie dans les gaz présents dans la chambre de combustion à un angle « θ » ;
   (b) comparer chaque « $C_\theta$ » à une valeur seuil « S1 » au-delà de laquelle la combustion pourrait avoir commencé ;
   (c) comparer « $| C_\theta - C_{\theta-\Delta\theta} |$ » à une valeur « S2 », « $C_{\theta-\Delta\theta}$ » étant une variable précédemment évaluée pour l'angle « θ-Δθ », « S2 » étant une valeur limite au-delà de laquelle « $C_\theta$ » est considérée comme une valeur non suffisamment stable pour identifier une combustion ;
   (d) s'il s'avère, à l'issue des deux précédentes étapes de comparaison, que le seuil « S1 » a été dépassé et que le seuil « S2 » n'a pas été dépassé pour un $C_\theta$, la valeur « θ » est enregistrée comme étant la valeur angulaire de début de combustion pour le cycle considéré.

2. Procédé selon la revendication précédente, **caractérisée en ce que** ladite évolution angulaire de la quantité d'énergie à un angle « θ » correspond à la dérivée angulaire de la quantité d'énergie « Q » à un angle « θ », qui est calculée à partir de l'expression suivante :

$$\frac{dQ}{d\theta} = \frac{V}{\gamma - 1} \; \frac{p}{T}\frac{dT}{d\theta} \; + p\frac{dV}{d\theta}$$

« p » étant la pression dans le cylindre à l'angle « θ »,
« V » étant le volume de la chambre de combustion à l'angle « θ »,
« T » étant la température dans la chambre de combustion à l'angle « θ »,
« γ » étant le rapport de chaleur spécifiques « $c_p/c_v$ ».

**3.** Procédé selon l'une des revendications précédentes, **caractérisé en ce que** « $C_\theta$ » est calculée à partir de :

- une mesure de l'angle de vilebrequin « $\theta$ », prises dans le cylindre en fonctionnement ;
- une mesure de la pression à l'angle de vilebrequin « $\theta$ », prise dans le cylindre en fonctionnement ;
- une sélection du volume de la chambre de combustion à l'angle « $\theta$ » dans une liste connue de valeurs volumiques classées par angle vilebrequin, ou un calcul du volume selon une loi mathématique ;
- un calcul de la température de la chambre de combustion à l'angle « $\theta$ » sur la base desdits volume et pression.

**4.** Procédé selon l'une des revendications précédentes, **caractérisé en ce que** « S1 » et/ou « S2 » est une valeur fixe ou une valeur déterminée à partir d'une cartographie fonction de conditions d'injection du moteur.

**5.** Procédé selon l'une des revendications précédentes, **caractérisé en ce que** le moteur comprend une deuxième injection, de sorte qu'il y ait ainsi une injection pilote et une injection principale, et **en ce qu'**il comprend en outre la mise en oeuvre des étapes (a) et (b) pour la deuxième injection, et une étape finale d'enregistrement de la valeur « $\theta$ » comme étant la valeur angulaire de début de combustion pour le cycle considéré si le seuil « S1 » a été dépassé.

**6.** Procédé selon l'une des revendications 1 à 4, **caractérisé en ce que** le moteur comprend une deuxième injection, de sorte qu'il y ait ainsi une injection pilote et une injection principale, et **en ce qu'**il comprend en outre la mise en oeuvre des étapes (a) à (d) pour la deuxième injection.

**7.** Procédé d'estimation de l'indice de cétane d'un carburant injecté dans un moteur à combustion interne, sur un nombre *n* de cycles (*n* étant un entier supérieur ou égal à 1), comprenant les étapes suivantes :

- déterminer un début de combustion d'un carburant injecté pour chacun des cycles, conformément au procédé selon l'une des revendications précédentes ;
- calculer l'angle moyen de début de combustion « $\theta_{moy}$ » à partir des « $\theta$ » de début de combustion relevés pour l'ensemble des n cycles ;
- calculer le délai de combustion entre un temps de référence déterminé et le temps début de combustion trouvé à partir de « $\theta_{moy}$ » ;
- déduire l'indice de cétane à partir du délai de combustion, sur la base d'un modèle déterminé ou d'une liste de correspondance entre des délais de combustion et des indices de cétane.

**8.** Procédé d'estimation de l'indice de cétane selon la revendication précédente, **caractérisé en ce que** l'indice de cétane est déduit à partir d'un ajustement de sa valeur afin de minimiser un écart entre ledit délai de combustion calculé et un délai de combustion estimé, le délai de combustion estimé étant calculé à partir de la loi d'Arrhenius prenant comme variables des pression, température, volume et masse de gaz mesurés dans le cylindre à chaque angle vilebrequin.

**9.** Procédé d'estimation de l'indice de cétane selon la revendication 7, **caractérisé en ce que** l'indice de cétane est déduit en faisant correspondre ledit délai de combustion calculé avec une expression empirique du délai de combustion, basée sur la loi d'Arrhenius, conduisant à l'expression suivante :

$$CN = \frac{B.\left(\dfrac{C}{P_{pmh}}\right)^{D}}{T_{pmh}.\ln\left(\dfrac{\delta}{A}\right)}$$

où CN, $T_{pmh}$ et $P_{pmh}$ sont respectivement l'indice de cétane, la température et la pression au point mort haut sans combustion, les coefficients A, B, C et D sont des constantes prédéterminées, et $\delta$ est ledit délai de combustion, **en ce que** :

$$T_{pmh} = T_{adm}.rv^{\gamma-1}$$

$$P_{pmh} = P_{adm} . rv^{\gamma}$$

où rv = $V_{adm}/V_{pmh}$, où $T_{adm}$ et $P_{adm}$ sont la température et la pression dans la chambre de combustion à la fermeture de la soupape d'admission, et **en ce que** la valeur de ($\gamma$) est identifiée à chaque cycle pendant la phase de compression, c'est-à-dire entre la fermeture de la soupape d'admission et l'injection, de la manière suivante :

$$\gamma = -\frac{\ln\left(P_{fin}\right) - \ln\left(P_{deb}\right)}{\ln\left(V_{fin}\right) - \ln\left(V_{deb}\right)}$$

où les angles de fin (« fin ») et de début (« deb ») sont pris assez éloignés, soit respectivement juste avant l'injection et juste après la fermeture de la soupape d'admission.

$\underline{\text{FIG.1}}$

MESURES DE $P_\theta, \theta$ — 10

Calcul de $C_\theta$ — 20

$\theta = \theta + \Delta\theta$

$C_\theta \geqslant S_1$ ? — 30  NON

OUI

$\left| C_\theta - C_{\theta-\Delta\theta} \right| \leqslant S_2$ ? — 40  NON

OUI

Enregistrer $\theta$ — 50

$\underline{\text{FIG.2}}$

Fonction "triangle"

## FIG.3A

dQ/dtheta
(1/F)*(dQ/dtheta)

theta

## FIG.3B

dQ/dt

## FIG.4A

1/V*dQ/dt

## FIG.4B

Volumes V et Vp

300

310

— Volume vrai
— Vp (loi parabolique)

Theta

FIG.5A

C calculé avec V

— C avec T2 et V à 1250

FIG.5B

C calculé avec Vp

— C avec T2 et Vp à 1250

FIG.5C

FIG.6

FIG.7

FIG.8

FIG.9A

FIG.9B

FIG.10

**RAPPORT DE RECHERCHE EUROPEENNE**

Office européen
des brevets

Numéro de la demande

EP 07 30 1254

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 132 605 A2 (DELPHI TECH INC [US]) 12 septembre 2001 (2001-09-12) | 1 | INV. F02D35/02 F02D41/00 |
| Y | * abrégé * * alinéas [0004], [0006] * * alinéas [0019] - [0026] * | 5,6 | |
| X | EP 1 300 588 A (AVL LIST GMBH [AT]) 9 avril 2003 (2003-04-09) | 1-4 | |
| Y | * abrégé * * alinéas [0002], [0008] - [0013] * | 5,6 | |
| Y | EP 1 559 887 A2 (WOODWARD GOVERNOR CO [US]) 3 août 2005 (2005-08-03) * alinéas [0006], [0007] * * alinéas [0014] - [0025]; figure 2 * | 5,6 | |
| D,A | WO 2005/119034 A (TOYOTA MOTOR CO LTD [JP]; AOYAMA TARO [JP]) 15 décembre 2005 (2005-12-15) * abrégé * * page 3, ligne 10 - page 13, ligne 1 * | 1-9 | |
| A | US 2003/010101 A1 (ZUR LOYE ET AL.) 16 janvier 2003 (2003-01-16) * abrégé * * alinéas [0013] - [0030] * | 1-6 | DOMAINES TECHNIQUES RECHERCHES (IPC) F02D |

Le présent rapport a été établi pour toutes les revendications

| Lieu de la recherche | Date d'achèvement de la recherche | Examinateur |
|---|---|---|
| Munich | 25 septembre 2007 | Wettemann, Mark |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

.............................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1254

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-09-2007

| Document brevet cité au rapport de recherche | | Date de publication | Membre(s) de la famille de brevet(s) | | Date de publication |
|---|---|---|---|---|---|
| EP 1132605 | A2 | 12-09-2001 | DE | 10011614 A1 | 13-09-2001 |
| EP 1300588 | A | 09-04-2003 | AUCUN | | |
| EP 1559887 | A2 | 03-08-2005 | JP | 2005214201 A | 11-08-2005 |
| | | | US | 2005161017 A1 | 28-07-2005 |
| WO 2005119034 | A | 15-12-2005 | CN | 1906390 A | 31-01-2007 |
| | | | JP | 2005344557 A | 15-12-2005 |
| | | | US | 2007079647 A1 | 12-04-2007 |
| US 2003010101 | A1 | 16-01-2003 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005119034 A

**Littérature non-brevet citée dans la description**

- **STRINGER ; CLARK ; CLARK.** The spontaneous ignition of hydrocarbon fuels in a following system. *Proc. Instn. Mech. Engrs,* 1969, vol. 184 (3J